# EUROPEAN PATENT SPECIFICATION

(11) **EP 1 049 332 B1**
(45) Date of publication and mention of the grant of the patent: **29.04.2009**
(21) Application number: 00301954.4
(22) Date of filing: 09.03.2000
(51) Int. Cl.: H04N 5/926, H04N 9/804, H04N 5/783

(54) **Method, apparatus and medium for recording digital information signal**
Verfahren, Vorrichtung und Medium zur Aufzeichnung eines digitalen Informationssignals
Procédé, appareil et medium pour l'enregistrement d'un signal d'information numèrique

(30) Priority: 28.04.1999 JP 12138099
(43) Date of publication of application: 02.11.2000
(73) Proprietor: VICTOR COMPANY OF JAPAN, LTD., Yokohama 221-0022 (JP)
(72) Inventor: Ichinoi, Yutaka, Yokohama-shi, Kanagawa-ken (JP); Ohishi, Takeo, Yokohama-shi, Kanagawa-ken (JP)
(74) Representative: Wallin, Nicholas James

(56) References cited:
- EP-A- 0 606 857
- JP-A- 9 233 428

## Description

This invention relates to a method of recording a digital information signal. In addition, this invention relates to an apparatus for recording a digital information signal. Furthermore, this invention relates to a digital information signal recording medium.

In digital satellite broadcasting, a signal of each of programs is efficiently compressed into transport packets (TP) by, for example, an MPEG2 encoder. Each transport packet has, for example, 188 bytes. Transport packets of plural programs are multiplexed into a transport stream (TS) on a time sharing basis. Transport streams are generated for transponders respectively. The generated transport streams are transmitted in parallel.

In general, a viewer of digital satellite broadcasting selects one program from among plural programs. To help the viewer with program selection, transport packets containing program specific information (PSI), that is, information of specifics of plural programs, are added to a transport stream. The program specific information represents a program association table (PAT) or a program map table (PMT).

Each of transport packets composing a transport stream has a packet identifier (PID) For example, a PID of "0" is assigned to a PAT-containing transport packet. Accordingly, a PAT-containing transport packet can be found in a transport stream by sensing a PID of "0". A PAT indicates the PID's of transport packets loaded with PMT's respectively. Accordingly, PMT-containing transport packets can be found in a transport stream by referring to the contents of a PAT. PMT's correspond to different programs respectively. Specifically, a first PMT indicates the PID of transport packets loaded with video information of a first program and also the PID's of transport packets loaded with audio information of the first program, and a second PMT indicates the PID of transport packets loaded with video information of a second program and also the PID's of transport packets loaded with audio information of the second program. Similarly, third and later PMT's relate to third and later programs respectively.

Thus, one program can be selected from among plural programs in a way including the following steps. First, a PAT-containing transport packet is detected in a transport stream. Second, a transport packet having a PMT corresponding to a desired program is found by referring to the contents of the PAT. Third, transport packets having PID's indicated by the PMT are extracted from the transport stream.

There is a known video tape recorder (VTR) of a helical scan type which can record a bit stream formed by digital data.

Japanese published unexamined patent application 9-233428 discloses a digital broadcasting reception terminal equipment in which an original digital data bit stream representing plural original programs is reduced, in response to viewer's program-selection request, into a second digital data bit stream representing only selected programs. The second digital data bit stream is recorded on a recording medium, and is then reproduced therefrom. In the case where at least one of the original programs is absent from the programs (the selected programs) represented by the reproduced digital data bit stream, the contents of a PAT in the reproduced digital data bit stream are corrected into conformity with only the programs (the selected programs) represented thereby.

European Patent Application No. 0606857 A describes a digital video tape recorder ("VTR") that selects data useful for generating images during trick playback operation and records the data in trick play tape segments arranged on a tape to form fast scan tracks and multi-speed playback tracks. Each fast scan track comprises trick play tape segments located on a diagonal, relative to the length of the tape, of the same angle as the angle at which the heads of a VTR are expected to pass over the tape during trick play operation at a specific speed and direction of operation. Each multi-speed playback track comprises a plurality of trick play tape segments arranged parallel to the length of the tape. Data which is used for at least one mode of trick play operation is recorded in each trick play tape segment. Each fast scan track and multi-speed track crosses multiple normal play tracks. During playback at a wide variety of speeds and directions, the heads pass over enough trick play segments of the multi-speed playback track to generate recognizable images during trick play operation. During specific speeds of playback operation supported by the use of fast scan tracks, data read from the fast scan tracks provide images of better quality than data that can be read from the multi-speed track. Data is recorded in each trick play segment in a manner that optimizes the amount of data that can be routinely recovered during trick playback operation despite tracking errors.

Japanese published unexamined patent application 6-261278 discloses a digital VTR which records data for normal playback and data for special playback (for example, high-speed search playback) on different areas of magnetic tape respectively.

During playback, when a VTR's user requires change of accessed data between normal-playback data and special-playback data, the VTR needs to re-implement complicated processes for extracting desired new video and audio data from a reproduced data stream by referring to PSI information (for example, PAT and PMT). The complicated processes tend to cause an interruption of data decoding. Therefore, change between normal playback and special playback tends to be slow and awkward.

It is a first object of this invention to provide an improved method of recording a digital information signal.

It is a second object of this invention to provide an improved apparatus for recording a digital information signal.

It is a third object of this invention to provide an improved digital information signal recording medium.

A first aspect of this invention provides a method of recording a digital information signal, characterised by comprising the steps of:
dividing a first stream of data for normal playback into first sync blocks having respective headers, the first data stream including packets which are loaded with portions of the normal-playback data respectively, wherein the packets in the first data stream contain information pieces representing a first packet ID;
loading each of the headers of the first sync blocks with an signal indicating that the related first sync block contains a part of the normal-playback data;
recording the first sync blocks;
dividing a second stream of data for special playback into second sync blocks having respective headers, the second data stream including packets which are loaded with portions of the special-playback data respectively, wherein the packets in the second data stream contain information pieces representing a second packet ID which is equal to the first packet ID; and
loading each of the headers of the second sync blocks with an ID signal indicating that the related second sync block contains a part of the special-playback data;
wherein the information pieces representing the first packet ID are extracted from the packets in the first data stream before being stored in a memory, and the information pieces representing the first packet ID are read out from the memory, and are then used as the information pieces representing the second packet ID.

A second aspect of this invention provides an apparatus for recording a digital information signal, characterised by comprising:
means for dividing a first stream of data for normal playback into first sync blocks having respective headers, the first data stream including packets which are loaded with portions of the normal-playback data respectively, wherein the packets in the first data stream contain information pieces representing a first packet ID;
means for loading each of the headers of the first sync blocks with an ID signal indicating that the related first sync block contains a part of the normal-playback data;
means for recording the first sync blocks;
means for dividing a second stream of data for special playback into second sync blocks having respective headers, the second data stream including packets which are loaded with portions of the special-playback data respectively, wherein the packets in the second data stream contain information pieces representing a second packet ID which is equal to the first packet ID; and
means for loading each of the headers of the second sync blocks with an ID signal indicating that the related second sync block contains a part of the special-playback data;
   wherein the information pieces representing the first packet are extracted from the packets in the first data stream before being stored in a memory, and the information pieces representing the first packet ID are read out from the memory, and are then used as the information pieces representing the second packet ID.

A third aspect of this invention provides a digital information signal recording medium which stores a first stream of data for normal playback and a second stream of data for special playback, the first data stream being divided into first sync blocks having respective headers, and including packets which are loaded with portions of the normal-playback data respectively, the second data stream being divided into second sync blocks having respective headers, and including packets which are loaded with portions of the special-playback data respectively;
wherein the packets in the first data stream contain information pieces representing a first packet ID, and the packets in the second data stream contain information pieces representing a second packet ID;
wherein the first packet ID and the second packet ID are equal to each other;
wherein the headers of the first sync blocks are loaded with an ID signal indicating that the first sync block contains a part of the normal playback data, and the headers of the second sync blocks are loaded with an ID signal indicating that the second sync block contains a part of the special playback data.
Fig. 1 is a diagram of an MPEG2 transport stream, and the details of one transport packet therein.
Fig. 2 is a diagram of a recording format according to a first embodiment of this invention.
Fig. 3 is a block diagram of a recording apparatus according to the first embodiment of this invention.
Fig. 4 is a block diagram of a recording apparatus according to a second embodiment of this invention.
Fig. 5 is a diagram of a recording disc according to a third embodiment of this invention.
Fig. 6 is a block diagram of a recording apparatus according to a fourth embodiment of this invention.
Fig. 7 is a block diagram of a system including a combination of a VTR and a TV set according to a sixth embodiment of this invention.
Fig. 8 is a block diagram of a VTR according to a seventh embodiment of this invention.

There now follows a description of the preferred embodiments.

### First Embodiment

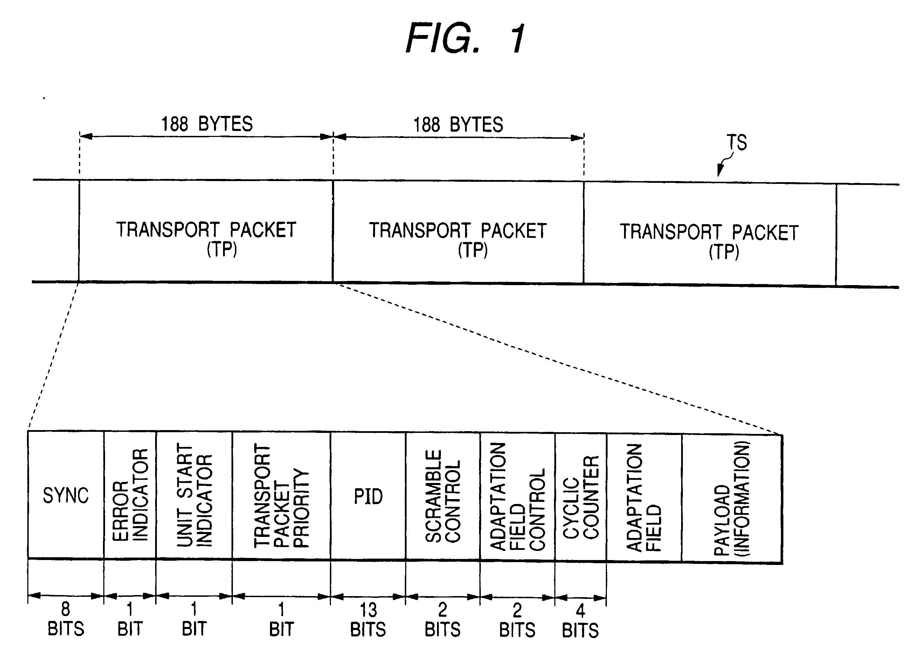

Fig. 1 shows an MPEG2 transport stream (TS) composed of transport packets each having 188 bytes. A head of each transport packet is occupied by a sync byte having 8 bits. A decoder can detect a head of each transport packet in response to a sync byte. In each transport packet, the sync byte is successively followed by a 1-bit data piece representing an error indicator, a 1-bit data piece representing a unit start indicator, a 1-bit data piece representing a transport packet priority, a 13-bit data piece representing a packet identifier (PID), a 2-bit data piece related to scramble control, a 2-bit data piece related to adaptation field control, a 4-bit data piece representing a cyclic counter, an adaptation field, and a payload (an information area). Video information, audio information, information representing a program association table (PAT), or information representing a program map table (PMT) is placed in the payload of each transport packet.

For example, a PID of "0" is assigned to a PAT-containing transport packet. Different PID's are assigned to transport packets having different PMT's, respectively. A PAT indicates the PID's of transport packets loaded with PMT's, respectively. The PMT's relate to different programs, respectively. Different PID's are assigned to video-information transport packets related to different programs, respectively. Different PID's are assigned to audio-information transport packets related to different programs, respectively. For example, a first common PID is assigned to video-information transport packets related to one program, and a second common PID is assigned to transport packets of first audio information of the program while a third common PID is assigned to transport packets of second audio information of the program. Each PMT indicates the PID of transport packets loaded with video information of the related program and also the PID's of transport packets loaded with audio information of the related program.

A set top box (STB) implements program selection in response to viewer's request. First, the STB detects a PAT-containing transport packet in an MPEG2 transport stream representing plural programs. Second, the STB refers to the contents of the PAT, and thereby finds a transport packet having a PMT corresponding to a program requested by a viewer. Thus, the STB detects the PMT corresponding to the requested program. Then, the STB extracts, from the MPEG2 transport stream, transport packets having PID's indicated by the PMT. The STB combines the extracted transport packets into a selection-resultant MPEG2 transport stream which represents only the requested program. The selection-resultant MPEG2 transport stream contains the PAT-containing transport packet and also the PMT-containing transport packet. The STB outputs the selection-resultant MPEG2 transport stream.

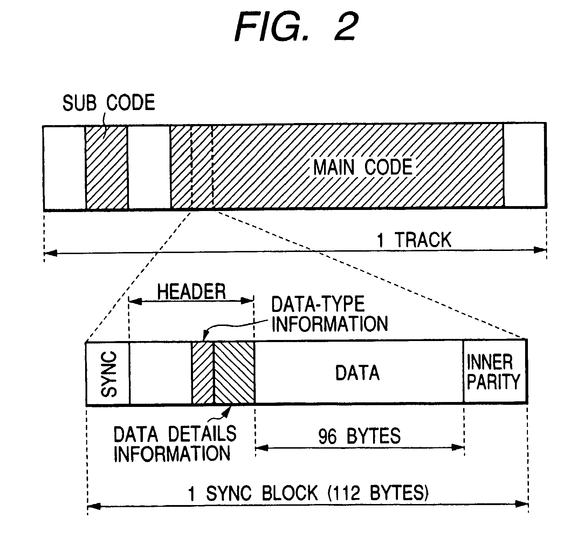

A video tape recorder (VTR) of a helical scan type records digital data on a magnetic tape while forming an array of slant tracks thereon. Fig. 2 shows a digital-data recording format according to a first embodiment of this invention. As shown in Fig. 2, each track has a sub-code recording area and a main-code recording area which are separate from each other. In Fig. 2, the blank portions of the track are used for a margin, a preamble signal, and a post-amble signal. Digital data containing main information such as a video signal are recorded on the main-code recording area. The main-code recording area and the sub-code recording area are divided into segments assigned to respective sync blocks each corresponding to an error-correction unit. Each sync bock has, for example, 112 bytes. The main-code recording area in each track has a size corresponding to several hundreds of sync blocks.

As shown in Fig. 2, each sync block has a sequence of a sync portion, a header, a data area, and an inner-parity portion. The data area has, for example, 96 bytes. The header contains an information piece representing a type of data placed in the data area. For example, the data-type information piece being "00" corresponds to normal-playback data. The data-type information piece being "01" corresponds to dummy data. The data-type information piece being "10" corresponds to special-playback data. The header also contains an information piece representing data details. Regarding a sync block for special-playback data, the data-details information piece represents a type of special playback. For example, the data-details information piece represents what speed the special playback relates to.

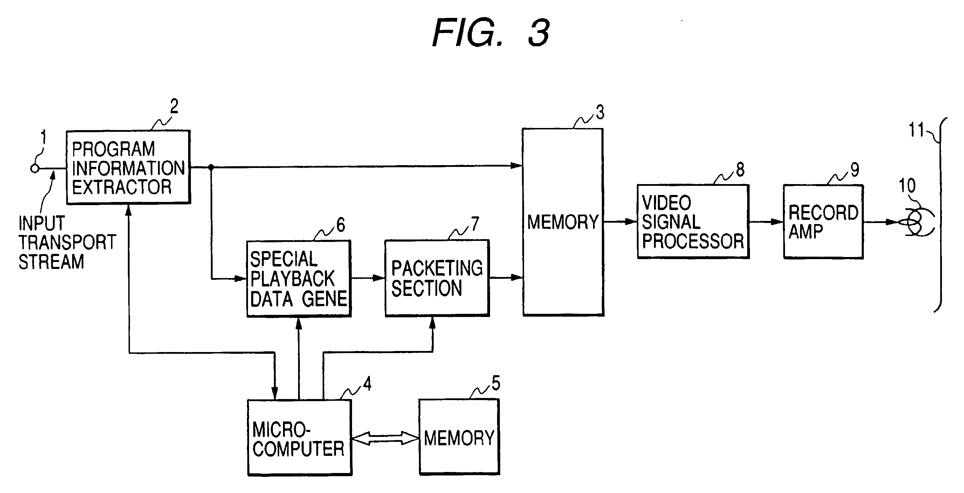

Fig. 3 shows a recording apparatus according to the first embodiment of this invention. The recording apparatus in Fig. 3 is, for example, the recording side of a VTR. The recording apparatus in Fig. 3 includes an input terminal 1, a program information extractor 2, a first memory 3, a microcomputer 4, a second memory 5, a special-playback data generator 6, a packeting section 7, a video-signal recording processor 8, a recording amplifier 9, and a magnetic head 10.

The input terminal 1 is connected to the program information extractor 2. The program information extractor 2 is connected to the first memory 3, the microcomputer 4, and the special-playback data generator 6. The microcomputer 4 is connected to the second memory 5, the special-playback data generator 6, and the packeting section 7. The special-playback data generator 6 is connected to the packeting section 7. The packeting section 7 is connected to the first memory 3. The first memory 3 is successively followed by the video-signal recording processor 8, the recording amplifier 9, and the magnetic head 10. The magnetic head 10 can access a magnetic tape 11.

A stream of transport packets representing a selected program is inputted into the program information extractor 2 via the input terminal 1. The input transport stream is generated by, for example, a set top box (STB). The input transport stream contains transport packets loaded with MPEG-encoded video and audio data of the selected program. In addition, the input transport stream contains a PAT-containing transport packet and also a PMT-containing transport packet. The input transport stream passes through the program information extractor 2 before being stored into a first region of the first memory 3 as a normal-playback data transport stream.

The program information extractor 2 accesses each PID in the input transport stream, and decides whether or not each PID corresponds to a PAT-containing transport packet (whether or not each PID is "0"). When a PID corresponding to a PAT-containing transport packet is detected, the program information extractor 2 reads the contents of a PAT represented by the transport packet in question. The program information extractor 2 notifies the microcomputer 4 of the PAT contents. The program information extractor 2 accesses a PMT-containing transport packet in the input transport stream by referring to the contents of the PAT. The program information extractor 2 reads the contents of a PMT represented by the transport packet in question. The program information extractor 2 notifies the microcomputer 4 of the PMT contents.

The microcomputer 4 is programmed to implement processes mentioned later. Specifically, the microcomputer 4 includes a combination of an input/output port, a processing section, a ROM, and a RAM. The microcomputer 4 operates in accordance with a control program stored in the ROM.

The microcomputer 4 controls the program information extractor 2, thereby receiving information of the PAT contents and the PMT contents. The microcomputer 4 generates a first signal, a second signal, and a third signal in response to the contents of the PMT. The first signal represents the PID of video-information transport packets in the input transport stream which relate to the selected program. The second signal represents the PID of transport packets of first audio information in the input transport stream which relate to the selected program. The third signal represents the PID of transport packets of second audio information in the input transport stream which relate to the selected program. The microcomputer 4 stores the first, second, and third PID signals into the second memory 5. In addition, the microcomputer 4 stores the information of the PAT contents and the PMT contents into the second memory 5.

The input transport stream which has passed through the program information extractor 2 is also fed to the special-playback data generator 6. The special-playback data generator 6 is controlled by the microcomputer 4, generating data for special playback such as high-speed playback or low-speed playback on the basis of the input transport stream. The special-playback data generator 6 outputs the special-playback data to the packeting section 7.

According to a first example of the method of generating the special-playback data, the special-playback data generator 6 extracts an MPEG-encoded video signal from the input transport stream. Then, the special-playback data generator 6 decodes the MPEG-encoded video signal into an original video signal. The special-playback data generator 6 compresses the original video signal by a pixel thinning process (a pixel decimating process) or a frame thinning process (a frame decimating process). The special-playback data generator 6 encodes the compression-resultant video signal into the special-playback data in accordance with an MPEG algorithm.

According to a second example of the method of generating the special-playback data, the special-playback data generator 6 executes a thinning process or a decimating process at a given interval for selecting video-signal portions from among video signal portions in the input transport stream which correspond to I pictures (intra-coded pictures). The special-playback data generator 6 places P-picture-corresponding video-signal portions between the selected I-picture-corresponding video-signal portions. Here, "P picture" is short for "predictive coded picture". The special-playback data generator 6 uses the resultant combination of the I-picture-corresponding video-signal portions and the P-picture-corresponding video-signal portions as the special-playback data.

In general, the special-playback data generator 6 excludes an audio signal from the special-playback data. Alternatively, the special-playback data generator 6 may generate special audio data from an audio signal in the input transport stream, and add the special audio data to the special-playback data. The special audio data are designed to join broken sounds during playback. According to another alternative example, the special-playback data generator 6 extracts portions from an audio signal in the input transport stream, and adds the extracted audio-signal portions to the special-playback data.

The microcomputer 4 reads out the information of the PAT contents and the PMT contents from the second memory 5. The microcomputer 4 informs the packeting section 7 of the PAT contents and the PMT contents. In addition, the microcomputer 4 reads out the first, second, and third PID signals from the second memory 5. The microcomputer 4 feeds the first, second, and third PID signals to the packeting section 7.

The packeting section 7 generates a stream of transport packets on the basis of the special-playback data fed from the special-playback data generator 6, the information of the PAT contents and the PMT contents which is fed from the microcomputer 4, and the first, second, and third PID signals fed from the microcomputer 4.

Specifically, the packeting section 7 generates a transport packet (a PAT-containing transport packet) loaded with data representing a PAT whose contents are equal to the PAT contents notified by the microcomputer 4. The packeting section 7 provides the PAT-containing transport packet with a PID of the given state corresponding to a PAT-containing transport packet. The packeting section 7 generates a transport packet (a PMT-containing transport packet) loaded with data representing a PMT whose contents are equal to the PMT contents notified by the microcomputer 4. The packeting section 7 provides the PMT-containing transport packet with a PID of the state represented by the PAT contents. The packeting section 7 generates video-information transport packets (or video-information transport packets and audio-information transport packets) loaded with the special-playback data. The packeting section provides each of the video-information transport packets with a PID equal to the PID represented by the first PID signal. In the presence of the audio-information transport packets, the packeting section provides each of the audio-information transport packets with a PID equal to either the PID represented by the second PID signal or the PID represented by the third PID signal. The packeting section 7 combines the PAT-containing transport packet, the PMT-containing transport packet, and the video-information transport packets (or the video-information transport packets and the audio-information transport packets) into the transport stream containing the special-playback data.

The packeting section 7 outputs the special-playback data transport stream to the first memory 3. The special-playback data transport stream is stored into a second region of the first memory 3 which is separate from the first region assigned to the normal-playback data transport stream. The first memory 3 acts as a buffer memory.

The video-signal recording processor 8 reads out the normal-playback data transport stream and the special-playback data transport stream from the first memory 3. The video-signal recording processor 8 multiplexes the normal-playback data transport stream and the special-playback data transport stream into sequences of sync blocks which are assigned to the main-code recording areas of tracks respectively. Specifically, the video-signal recording processor 8 divides the normal-playback data transport stream and the special-playback data transport stream into portions equal in size to the data area of one sync block. The video-signal recording processor 8 places portions of the normal-playback data transport stream and portions of the special-playback data transport stream in the data areas of respective sync blocks. Sync blocks to be loaded with portions of the special-playback data transport stream are chosen so that a piece of the special-playback data will be located at a given position in each track on the magnetic tape 11. The video-signal recording processor 8 generates information pieces placed in areas of each sync block other than the data area thereof.

The video-signal recording processor 8 sets a data-type information piece in the header of each sync block as follows. A data-type information piece in the header of each of sync blocks assigned to portions of the normal-playback data transport stream is set to the state ("00") corresponding to normal-playback data. A data-type information piece in the header of each of sync blocks assigned to portions of the special-playback data transport stream is set to the state ("10") corresponding to special-playback data.

The video-signal recording processor 8 generates information pieces assigned to areas of tracks other than the main-code recording areas thereof The video-signal recording processor 8 combines the generated information pieces and the sequences of sync blocks into a signal to be recorded on the magnetic tape 11. The signal to be recorded is of the format shown in Fig. 2. The video-signal recording processor 8 outputs the resultant signal (the signal to be recorded) to the recording amplifier 9. The recording amplifier 9 increases the level of the output signal of the video-signal recording processor 8 to a given level. The recording amplifier 9 outputs the amplification-resultant signal to the magnetic head 10. The magnetic head 10 records the output signal of the recording amplifier 9 on the magnetic tape 11 while forming slant tracks thereon.

As understood from the above description, regarding the normal-playback data transport stream and the special-playback data transport stream which are on the magnetic tape 11 and which are of the same program, the PID of normal-playback video-information transport packets is equal to the PID of special-playback video-information transport packets. In addition, the PID's of normal-playback audio-information transport packets are equal to the PID's of special-playback audio-information transport packets. The PID equality provides the following advantage. During playback of information from the magnetic tape 11, when a VTR's user requires change of accessed data between normal-playback data and special-playback data, a VTR does not need to re-implement complicated processes for extracting desired new video and audio data from a reproduced data stream by referring to PSI information (for example, PAT and PMT). Accordingly, it is possible to prevent the occurrence of an interruption of data decoding. Therefore, change between normal playback and special playback is quick and smooth.

### Second Embodiment

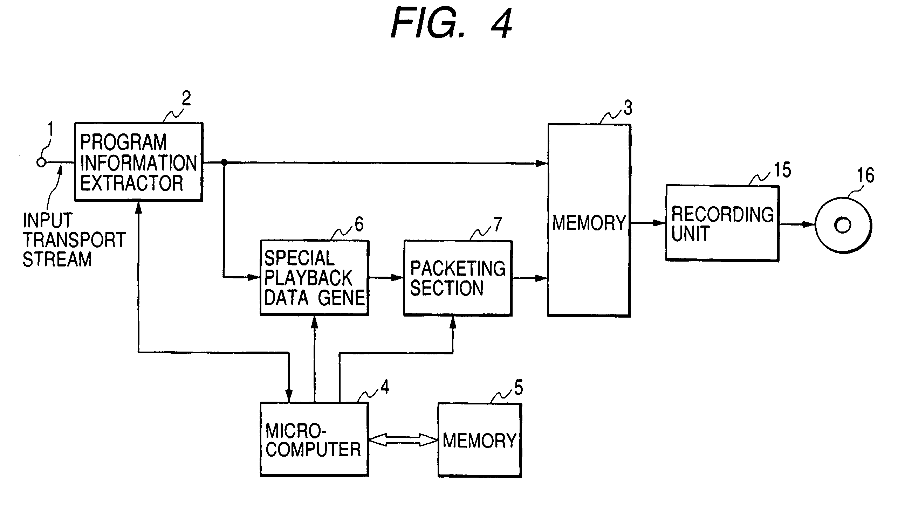

Fig. 4 shows a recording apparatus according to a second embodiment of this invention. The recording apparatus in Fig. 4 is similar to the recording apparatus in Fig. 3 except for design changes mentioned hereinafter. The recording apparatus of Fig. 4 includes a recording unit 15 which replaces the combination of the video-signal recording processor 8, the recording amplifier 9, and the magnetic head 10 (see Fig. 3). The recording unit 15 has, for example, a disc drive. The recording unit 15 is connected to a first memory 3. The recording unit 15 can access a recording disc 16 such as a magnetic disc, a magneto-optical disc, or a writable optical disc. Examples of the writable optical disc are a writable DVD and a writable CD. It should be noted that the recording disc 16 may be replaced by a semiconductor memory or another recording medium.

The recording unit 15 reads out a normal-playback data transport stream and a special-playback data transport stream from the first memory 3. The recording unit 15 records the normal-playback data transport stream on a first region of the recording disc 16. The recording unit 15 records the special-playback data transport stream on a second region of the recording disc 16 which is separate from the first region assigned to the normal-playback data transport stream. The recording unit 15 generates contents information such as table-of contents information which represents the contents of the information recorded on the recording disc 16, the position of the first region of the recording disc 16 where the normal-playback data transport stream is recorded, and the position of the second region of the recording disc 16 where the special-playback data transport stream is recorded. The recording unit 15 records the contents information on an innermost region of the recording disc 16 which is separate from the first and second regions assigned to the normal-playback data transport stream and the special-playback data transport stream.

### Third Embodiment

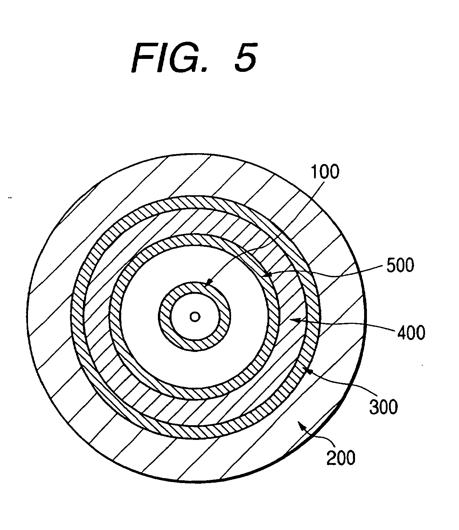

Fig. 5 shows a recording disc according to a third embodiment of this invention. With reference to Fig. 5, an innermost area 100 of the recording disc stores contents information such as table-of contents information. An outermost area 200 of the recording disc stores information containing a normal-playback data transport stream of a first program. An area 300 of the recording disc which extends immediately inward of the outermost area 200 stores information containing a special-playback data transport stream of the first program. An area 400 of the recording disc which extends immediately inward of the area 300 stores information containing a normal-playback data transport stream of a second program different from the first program. An area 500 of the recording disc which extends between the areas 100 and 400 stores information containing a special-playback data transport stream of the second program.

The normal-playback data transport stream of the first program and the special-playback data transport stream of the first program are given different file numbers respectively. Accordingly, the normal-playback data transport stream of the first program and the special-playback data transport stream of the first program are handled as different files.

Similarly, the normal-playback data transport stream of the second program and the special-playback data transport stream of the second program are given different file numbers respectively. Accordingly, the normal-playback data transport stream of the second program and the special-playback data transport stream of the second program are handled as different files.

The contents information in the innermost area 100 of the recording disc has a first piece representing which of the files correspond to a pair of the normal-playback data transport stream of the first program and the special-playback data transport stream of the first program. In addition, the contents information has a second piece representing which of the files correspond to a pair of the normal-playback data transport stream of the second program and the special-playback data transport stream of the second program. Furthermore, the contents information has a third piece representing a position in the recording disc where the normal-playback data transport stream of the first program is recorded, a fourth piece representing a position in the recording disc where the special-playback data transport stream of the first program is recorded, a fifth piece representing a position in the recording disc where the normal-playback data transport stream of the second program is recorded, and a sixth piece representing a position in the recording disc where the special-playback data transport stream of the second program is recorded.

At a start of playback, the contents information is read out from the recording disc, and the contents information is used in discriminating the normal-playback data transport stream and the special-playback data transport stream of a same program from each other.

The normal-playback data transport stream of the first program, the special-playback data transport stream of the first program, the normal-playback data transport stream of the second program, and the special-playback data transport stream of the second program may be recorded on a sync-block division basis. In this case, the header of each sync block contains a data-type information piece representing whether the sync block is loaded with normal-playback data portion or special-playback data portion. Discrimination between normal-playback data and special-playback data may be implemented by referring to the data-type information pieces of the headers of sync blocks.

Time code signals representing time positions are added to data in each of the files. When change between normal playback and special playback is required, a reproducing head in a disc drive apparatus moves from a time position in one file to the same time position in another file by referring to time code signals.

PID's are common to transport packets in the normal-playback data transport stream of the first program and transport packets in the special-playback data transport stream of the first program. Also, PID's are common to transport packets in the normal-playback data transport stream of the second program and transport packets in the special-playback data transport stream of the second program.

### Fourth Embodiment

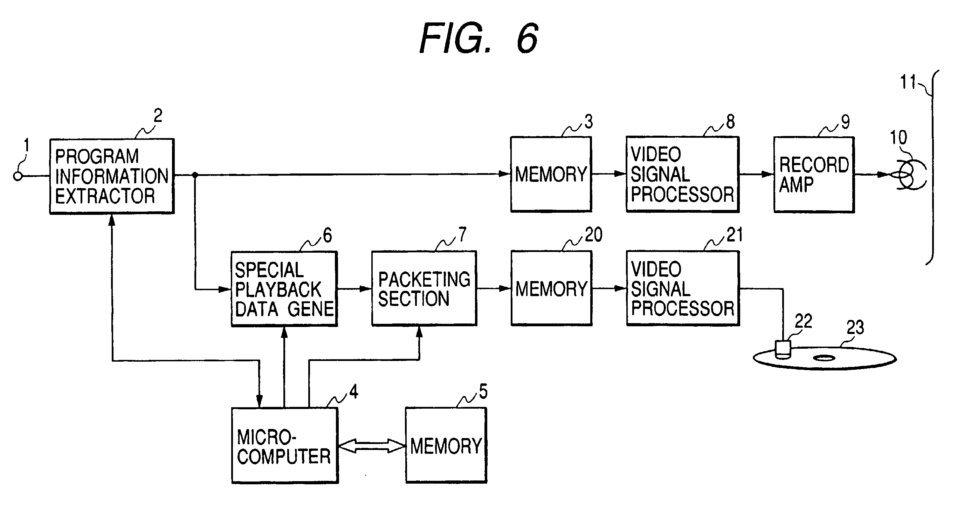

Fig. 6 shows a recording apparatus according to a fourth embodiment of this invention. The recording apparatus in Fig. 6 is similar to the recording apparatus in Fig. 3 except for design changes mentioned hereinafter. The recording apparatus of Fig. 6 includes a third memory 20, a second video-signal recording processor 21, and a transducer 22. The third memory 20 is connected to a packeting section 7. The third memory 20 is successively followed by the second video-signal recording processor 21 and the transducer 22. The transducer 22 can access a recording disc 23.

A normal-playback data transport stream is recorded on a magnetic tape 11 as in the embodiment of Fig. 3. A special-playback data transport stream is recorded on the recording disc 23.

Specifically, the special-playback data transport stream generated by the packeting section 7 is stored into the third memory 20. The third memory 20 acts as a buffer memory. The second video-signal recording processor 21 reads out the special-playback data transport stream from the third memory 20. The second video-signal recording processor 21 subjects the special-playback data transport stream to signal processing for record. The second video-signal recording processor 21 outputs the processing-resultant signal to the transducer 22. The transducer 22 records the output signal of the second video-signal recording processor 21 on the recording disc 23.

The upper surface of a cassette containing the magnetic tape 11 has a disc accommodating portion in which the recording disc 23 is placed. When the cassette is loaded into a reproducing apparatus, the recording disc 23 can be accessed by a head in the reproducing apparatus. The head is the transducer 22 in the case where the transducer 22 is used in common by the recording apparatus and the reproducing apparatus. Accordingly, the magnetic tape 11 and the recording disc 23 are handled as one set.

It should be noted that the recording disc 23 may be a hard disc placed in a combination of the recording apparatus and the reproducing apparatus. In this case, information (ID information) for identifying the cassette or a recorded program is placed in a signal recorded on the magnetic tape 11 or is stored in a semiconductor memory provided on the cassette. By reading out the ID information and referring to the ID information, it is possible to identify special-playback data of the program which are recorded on the hard disc.

### Fifth Embodiment

A fifth embodiment of this invention is directed to a reproducing apparatus for a recording medium which is a magnetic tape 11 in Fig. 3, a recording disc 16 in Fig. 4, a recording disc in Fig. 5, or a combination of a magnetic tape 11 and a recording disc 23 in Fig. 6. The reproducing apparatus reproduces a signal from the recording medium.

During playback, when a viewer (a user) requests change between normal playback and special playback, the viewer actuates a remote control unit or an operation unit of the reproducing apparatus. The reproducing apparatus changes currently-accessed data on the recording medium between normal-playback data and special-playback data in response to the actuation of the remote control unit or the operation unit.

The reproducing apparatus recovers an original video signal and an original audio signal from the reproduced signal through processes including an MPEG decoding process and a digital-to-analog converting process. The recovered video signal is fed to a display. Thus, pictures represented by the recovered video signal are indicated by the display. The recovered audio signal is fed to loudspeakers before being converted thereby into corresponding sounds.

### Sixth Embodiment

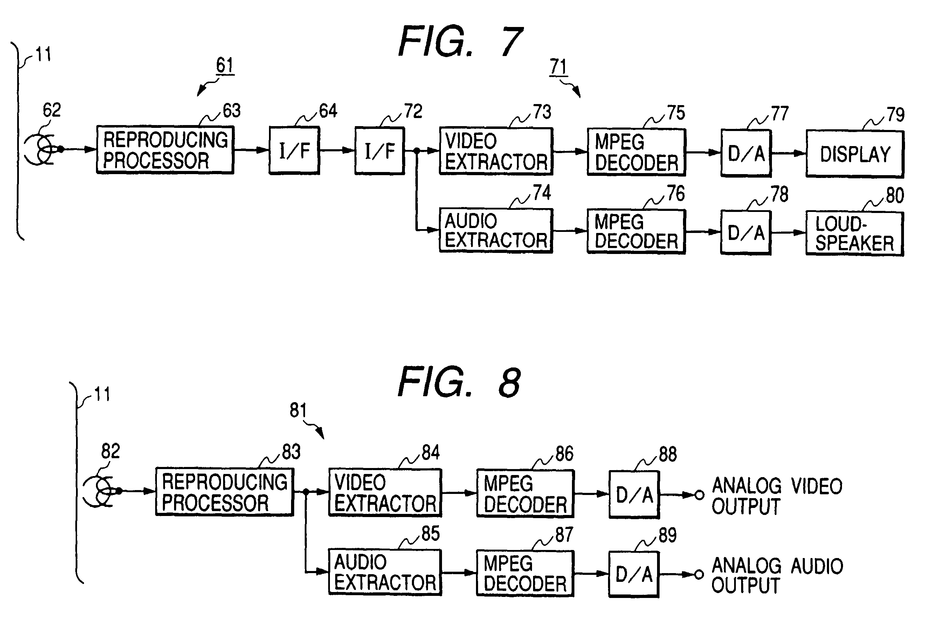

Fig. 7 shows a system including a combination of a reproducing apparatus 61 and a TV set 71 according to a sixth embodiment of this invention. As shown in Fig. 7, the reproducing apparatus 61 includes a magnetic head 62, a reproducing processor 63, and a digital interface 64. The magnetic head 62 is successively followed by the reproducing processor 63 and the digital interface 64.

The magnetic head 62 scans a magnetic tape 11 on which a signal has been recorded by the recording apparatus of Fig. 3. The magnetic head 62 reproduces a signal from the magnetic tape 11. The magnetic head 62 outputs the reproduced signal to the reproducing processor 63. The device 63 processes the reproduced signal into a digital signal. The reproducing processor 63 outputs the digital signal to the digital interface 64. The digital interface 64 has a structure conforming to, for example, the IEEE 1394 standards.

As shown in Fig. 7, the TV set 71 includes a digital interface 72, a video extractor 73, an audio extractor 74, a video MPEG decoder 75, an audio MPEG decoder 76, D/A converters 77 and 78, a display 79, and a loudspeaker 80. The digital interface 72 is followed by the video extractor 73 and the audio extractor 74. The video extractor 73 is successively followed by the video MPEG decoder 75, the D/A converter 77, and the display 79. The audio extractor 74 is successively followed by the audio MEG decoder 76, the D/A converter 78, and the loudspeaker 80.

The digital interface 72 has a structure conforming to, for example, the IEEE 1394 standards. The digital interface 72 can be connected with the digital interface 64 within the reproducing apparatus 61. In the case where the digital interface 72 is connected with the digital interface 64, the digital signal outputted from the reproducing processor 63 within the reproducing apparatus 61 is transmitted to the video extractor 73 and the audio extractor 74 within the TV set 71 via the digital interfaces 64 and 72. The device 73 extracts a digital video signal from the output signal of the reproducing apparatus 61. The video extractor 73 outputs the digital video signal to the video MPEG decoder 75. The device 75 decodes the digital video signal according to an MPEG decoding process. The video MPEG decoder 75 outputs the decoding-resultant video signal to the D/A converter 77. The D/A converter 77 changes the output signal of the video MPEG decoder 75 into a corresponding analog video signal. The D/A converter 77 outputs the analog video signal to the display 79. The display 79 indicates pictures represented by the output signal of the D/A converter 77.

The device 74 extracts a digital audio signal from the output signal of the reproducing apparatus 61. The audio extractor 74 outputs the digital audio signal to the audio MPEG decoder 76. The device 76 decodes the digital audio signal according to an MPEG decoding process. The audio MPEG decoder 76 outputs the decoding-resultant audio signal to the D/A converter 78. The D/A converter 78 changes the output signal of the audio MPEG decoder 76 into a corresponding analog audio signal. The D/A converter 78 outputs the analog audio signal to the loudspeaker 80. The loudspeaker 80 converts the analog audio signal into corresponding sounds.

As previously mentioned, regarding a normal-playback data transport stream and a special-playback data transport stream which are on the magnetic tape 11 and which are of a same program, the PID of normal-playback video-information transport packets is equal to the PID of special-playback video-information transport packets. In addition, the PID's of normal-playback audio-information transport packets are equal to the PID's of special-playback audio-information transport packets. The PID equality provides the following advantage. During playback of information from the magnetic tape 11, when a user requires change of accessed data between normal-playback data and special-playback data, neither the reproducing apparatus 61 nor the TV set 71 needs to re-implement complicated processes for extracting desired new video and audio data from a reproduced data stream by referring to PSI information (for example, PAT and PMT). Accordingly, it is possible to prevent the occurrence of an interruption of data decoding. Therefore, change between normal playback and special playback is quick and smooth.

An example of the reproducing apparatus 61 is the reproducing side of a VTR. The recording apparatus in Fig. 3 and the reproducing apparatus 61 may be combined into a VTR.

### Seventh Embodiment

Fig. 8 shows a reproducing apparatus 81 according to a seventh embodiment of this invention. As shown in Fig. 8, the reproducing apparatus 81 includes a magnetic head 82, a reproducing processor 83, a video extractor 84, an audio extractor 85, a video MPEG decoder 86, an audio MPEG decoder 87, and D/A converters 88 and 89.

The magnetic head 82 is followed by the reproducing processor 83. The reproducing processor 83 is followed by the video extractor 84 and the audio extractor 85. The video extractor 84 is successively followed by the video MPEG decoder 86 and the D/A converter 88. The audio extractor 85 is successively followed by the audio MEG decoder 87 and the D/A converter 89.

The magnetic head 82 scans a magnetic tape 11 on which a signal has been recorded by the recording apparatus of Fig. 3. The magnetic head 82 reproduces a signal from the magnetic tape 11. The magnetic head 82 outputs the reproduced signal to the reproducing processor 83. The device 83 processes the reproduced signal into a digital signal. The reproducing processor 83 outputs the digital signal to the video extractor 84 and the audio extractor 85. The device 84 extracts a digital video signal from the output signal of the reproducing processor 83. The video extractor 84 outputs the digital video signal to the video MPEG decoder 86. The device 86 decodes the digital video signal according to an MPEG decoding process. The video MPEG decoder 86 outputs the decoding-resultant video signal to the D/A converter 88. The D/A converter 88 changes the output signal of the video MPEG decoder 86 into a corresponding analog video signal. The D/A converter 88 outputs the analog video signal.

The device 85 extracts a digital audio signal from the output signal of the reproducing processor 83. The audio extractor 85 outputs the digital audio signal to the audio MPEG decoder 87. The device 87 decodes the digital audio signal according to an MPEG decoding process. The audio MPEG decoder 87 outputs the decoding-resultant audio signal to the D/A converter 89. The D/A converter 89 changes the output signal of the audio MPEG decoder 87 into a corresponding analog audio signal. The D/A converter 89 outputs the analog audio signal.

As previously mentioned, regarding a normal-playback data transport stream and a special-playback data transport stream which are on the magnetic tape 11 and which are of a same program, the PID of normal-playback video-information transport packets is equal to the PID of special-playback video-information transport packets. In addition, the PID's of normal-playback audio-information transport packets are equal to the PID's of special-playback audio-information transport packets. The PID equality provides the following advantage. During playback of information from the magnetic tape 11, when a user requires change of accessed data between normal-playback data and special-playback data, the reproducing apparatus 81 does not need to re-implement complicated processes for extracting desired new video and audio data from a reproduced data stream by referring to PSI information (for example, PAT and PMT). Accordingly, it is possible to prevent the occurrence of an interruption of data decoding. Therefore, change between normal playback and special playback is quick and smooth.

An example of the reproducing apparatus 81 is the reproducing side of a VTR. The recording apparatus in Fig. 3 and the reproducing apparatus 81 may be combined into a VTR.

## Claims

1. A method of recording a digital information signal, **characterised by** comprising the steps of:
dividing a first stream of data for normal playback into first sync blocks having respective headers, the first data stream including packets which are loaded with portions of the normal-playback data respectively, wherein the packets in the first data stream contain information pieces representing a first packet ID;
loading each of the headers of the first sync blocks with an signal indicating that the related first sync block contains a part of the normal-playback data;
recording the first sync blocks;
dividing a second stream of data for special playback into second sync blocks having respective headers, the second data stream including packets which are loaded with portions of the special-playback data respectively, wherein the packets in the second data stream contain information pieces representing a second packet ID which is equal to the first packet ID; and
loading each of the headers of the second sync blocks with an signal indicating that the related second sync block contains a part of the special-playback data;
wherein the information pieces representing the first packet ID are extracted from the packets in the first data stream before being stored in a memory, and the information pieces representing the first packet are read out from the memory, and are then used as the information pieces representing the second packet ID.

2. An apparatus for recording a digital information signal, **characterised by** comprising:
means (2, 3, 8) for dividing a first stream of data for normal playback into first sync blocks having respective headers, the first data stream including packets which are loaded with portions of the normal-playback data respectively, wherein the packets in the first data stream contain information pieces representing a first packet ID;
means (8) for loading each of the headers of the first sync blocks with an ID signal indicating that the related first sync block contains a part of the normal-playback data; means (9, 10) for recording the first sync blocks;
means (2, 4, 6, 7) for dividing a second stream of data for special playback into second sync blocks having respective headers, the second data stream including packets which are loaded with portions of the special-playback data respectively, wherein the packets in the second data stream contain information pieces representing a second packet ID which is equal to the first packet ID; and
means (8) for loading each of the headers of the second sync blocks with an ID signal indicating that the related second sync block contains a part of the special-playback data;
wherein the information pieces representing the first packet are extracted from the packets in the first data stream before being stored in a memory, and the information pieces representing the first packet ID are read out from the memory, and are then used as the information pieces representing the second packet ID.

3. A digital information signal recording medium which stores a first stream of data for normal playback and a second stream of data for special playback, the first data stream being divided into first sync blocks having respective headers, and including packets which are loaded with portions of the normal-playback data respectively, the second data stream being divided into second sync blocks having respective headers, and including packets which are loaded with portions of the special-playback data respectively;
wherein the packets in the first data stream contain information pieces representing a first packet ID, and the packets in the second data stream contain information pieces representing a second packet ID;
wherein the first packet ID and the second packet ID are equal to each other;
wherein the headers of the first sync blocks are loaded with an ID signal indicating that the first sync block contains a part of the normal playback data, and the headers of the second sync blocks are loaded with an ID signal indicating that the second sync block contains a part of the special playback data.

## Patentansprüche

1. Verfahren zum Aufzeichnen eines digitalen Informationssignals, **gekennzeichnet durch** die Schritte, dass
ein erster Strom von Daten für eine normale Wiedergabe in erste Sync-Blöcke mit jeweiligen Headern aufgeteilt wird, wobei der erste Datenstrom Pakete umfasst, die jeweils mit Abschnitten der Normalwiedergabe-Daten gefüllt sind, wobei die Pakete in dem ersten Datenstrom Informationsstücke enthalten, die eine erste Paket-ID darstellen;
jeder der Header der ersten Sync-Blöcke mit einem ID-Signal gefüllt wird, das angibt, dass der zugehörige erste Sync-Block einen Teil der Normalwiedergabe-Daten enthält;
die ersten Sync-Blöcke aufgezeichnet werden;
ein zweiter Strom von Daten für eine spezielle Wiedergabe in zweite Sync-Blöcke mit jeweiligen Headern aufgeteilt wird, wobei der zweite Datenstrom Pakete umfasst, die jeweils mit Abschnitten der Spezialwiedergabe-Daten gefüllt sind, wobei die Pakete in dem zweiten Datenstrom Informationsstücke enthalten, die eine zweite Paket-ID darstellen, die gleich der ersten Paket-ID ist; und
jeder der Header der zweiten Sync-Blöcke mit einem ID-Signal gefüllt wird, das angibt, dass der zugehörige zweite Sync-Block einen Teil der Spezialwiedergabe-Daten enthält;
wobei die Informationsstücke, die die erste Paket-ID darstellen, von den Paketen in dem ersten Datenstrom vor einem Speichern in einem Speicher extrahiert werden, und die Informationsstücke, die die erste Paket-ID darstellen, aus dem Speicher ausgelesen werden und dann als die Informationsstücke verwendet werden, die die zweite Paket-ID darstellen.

2. Vorrichtung zum Aufzeichnen eines digitalen Informationssignals, **gekennzeichnet durch**:
ein Mittel (2, 3, 8) zum Aufteilen eines ersten Stroms von Daten für eine normale Wiedergabe in erste Sync-Blöcke mit jeweiligen Headern, wobei der erste Datenstrom Pakete umfasst, die jeweils mit Abschnitten der Normalwiedergabe-Daten gefüllt sind, wobei die Pakete in dem ersten Datenstrom Informationsstücke enthalten, die eine erste Paket-ID darstellen;
ein Mittel (8) zum Füllen jedes der Header der ersten Sync-Blöcke mit einem ID-Signal, das angibt, dass der zugehörige erste Sync-Block einen Teil der Normalwiedergabe-Daten enthält;
ein Mittel (9, 10) zum Aufzeichnen der ersten Sync-Blöcke;
ein Mittel (2, 4, 6, 7) zum Aufteilen eines zweiten Stroms von Daten für eine spezielle Wiedergabe in zweite Sync-Blöcke mit jeweiligen Headern, wobei der zweite Datenstrom Pakete umfasst, die jeweils mit Abschnitten der Spezialwiedergabe-Daten gefüllt sind, wobei die Pakete in dem zweiten Datenstrom Informationsstücke enthalten, die eine zweite Paket-ID darstellen, die gleich der ersten Paket-ID
ist; und
ein Mittel (8) zum Füllen jedes der Header der zweiten Sync-Blöcke mit einem ID-Signal, das angibt, dass der zugehörige zweite Sync-Block einen Teil der Spezialwiedergabe-Daten enthält;
wobei die Informationsstücke, die die erste Paket-ID darstellen, von den Paketen in dem ersten Datenstrom vor einem Speichern in einem Speicher extrahiert werden, und die Informationsstücke, die die erste Paket-ID darstellen, aus dem Speicher ausgelesen werden und dann als die Informationsstücke verwendet werden, die die zweite Paket-ID darstellen.

3. Aufzeichnungsmedium für ein digitales Informationssignal, das einen ersten Strom von Daten für eine normale Wiedergabe und einen zweiten Strom von Daten für eine spezielle Wiedergabe speichert, wobei der erste Datenstrom in erste Sync-Blöcke mit jeweiligen Headern aufgeteilt ist und Pakete umfasst, die jeweils mit Abschnitten der Normalwiedergabe-Daten gefüllt sind, wobei der zweite Datenstrom in zweite Sync-Blöcke mit jeweiligen Headern aufgeteilt ist und Pakete umfasst, die jeweils mit Abschnitten der Spezialwiedergabe-Daten gefüllt sind;
wobei die Pakete in dem ersten Datenstrom Informationsstücke enthalten, die eine erste Paket-ID darstellen, und die Pakete in dem zweiten Datenstrom Informationsstücke enthalten, die eine zweite Paket-ID darstellen;
wobei die erste Paket-ID und die zweite Paket-ID gleich sind;
wobei die Header der ersten Sync-Blöcke mit einem ID-Signal gefüllt sind, das angibt, dass der erste Sync-Block einen Teil der Normalwiedergabe-Daten enthält, und die Header der zweiten Sync-Blöcke mit einem ID-Signal gefüllt sind, das angibt, dass der zweite Sync-Block einen Teil der Spezialwiedergabe-Daten enthält.

## Revendications

1. Procédé d'enregistrement d'un signal d'informations numériques, **caractérisé par** le fait de comprendre les étapes consistant à :
diviser un premier flux de données pour lecture normale en premiers blocs de synchronisation ayant des en-têtes respectifs, le premier flux de données comprenant des paquets qui sont chargés avec des portions des données de lecture normale respectivement, où les paquets dans le premier flux de données contiennent des informations représentant un premier ID de paquets;
charger chacun des en-têtes des premiers blocs de synchronisation avec un signal d'ID indiquant que le premier bloc de synchronisation associé contient une partie des données de lecture normale;
enregistrer les premiers blocs de synchronisation;
diviser un deuxième flux de données pour lecture spéciale en deuxièmes blocs de synchronisation ayant des en-têtes respectifs, le deuxième flux de données comprenant des paquets qui sont chargés avec des portions des données de lecture spéciale respectivement, où les paquets dans le deuxième flux de données contiennent des informations représentant un deuxième ID de paquets qui est égal au premier ID de paquets; et
charger chacun des en-têtes des deuxièmes blocs de synchronisation avec un signal d'ID indiquant que le deuxième bloc de synchronisation associé contient une partie des données de lecture spéciale;
dans lequel les informations représentant le premier ID de paquets sont extraites des paquets dans le premier flux de données avant d'être stockées dans une mémoire, et les informations représentant le premier ID de paquets sont lues à partir de la mémoire, et sont ensuite utilisées comme informations représentant le deuxième ID de paquets.

2. Appareil d'enregistrement d'un signal d'informations numériques, **caractérisé par** le fait de comprendre :
un moyen (2, 3, 8) pour diviser un premier flux de données pour lecture normale en premiers blocs de synchronisation ayant des en-têtes respectifs, le premier flux de données comprenant des paquets qui sont chargés avec des portions des données de lecture normale respectivement, où les paquets dans le premier flux de données contiennent des informations représentant un premier ID de paquets;
un moyen (8) pour charger chacun des en-têtes des premiers blocs de synchronisation avec un signal d'ID indiquant que le premier bloc de synchronisation associé contient une partie des données de lecture normale;
un moyen (9, 10) pour enregistrer les premiers blocs de synchronisation;
un moyen (2, 4, 6, 7) pour diviser un deuxième flux de données pour lecture spéciale en deuxièmes blocs de synchronisation ayant des en-têtes respectifs, le deuxième flux de données comprenant des paquets qui sont chargés avec des portions des données de lecture spéciale respectivement, où les paquets dans le deuxième flux de données contiennent des informations représentant un deuxième ID de paquets qui est égal au premier ID de paquets; et
un moyen (8) pour charger chacun des en-têtes des deuxièmes blocs de synchronisation avec un signal d'ID indiquant que le deuxième bloc de synchronisation associé contient une partie des données de lecture spéciale;
dans lequel les informations représentant le premier ID de paquets sont extraites des paquets dans le premier flux de données avant d'être stockées dans une mémoire, et les informations représentant le premier ID de paquets sont lues à partir de la mémoire, et sont ensuite utilisées comme informations représentant le deuxième ID de paquets.

3. Support d'enregistrement de signal d'informations numériques qui stocke un premier flux de données pour lecture normale et un deuxième flux de données pour lecture spéciale, le premier flux de données étant divisé en premiers blocs de synchronisation ayant des en-têtes respectifs, et comprenant des paquets qui sont chargés avec des portions des données de lecture normale respectivement, le deuxième flux de données étant divisé en deuxièmes blocs de synchronisation ayant des en-têtes respectifs, et comprenant des paquets qui sont chargés avec des portions des données de lecture spéciale respectivement;
dans lequel les paquets dans le premier flux de données contiennent des informations représentant un premier ID de paquets, et les paquets dans le deuxième flux de données contiennent des informations représentant un deuxième ID de paquets;
dans lequel le premier ID de paquets et le deuxième ID de paquets sont égaux;
dans lequel les en-têtes des premier blocs de synchronisation sont chargés avec un signal d'ID indiquant que le premier bloc de synchronisation contient une partie des données de lecture normale, et les en-têtes des deuxièmes blocs de synchronisation sont chargés avec un signal d'ID indiquant que le deuxième bloc de synchronisation contient une partie des données de lecture spéciale.
